(19) **Europäisches Patentamt**
**European Patent Office**
**Office européen des brevets**

(11) **EP 4 586 115 A1**

(12) **EUROPEAN PATENT APPLICATION**

(43) Date of publication:
**16.07.2025 Bulletin 2025/29**

(21) Application number: **24305082.0**

(22) Date of filing: **12.01.2024**

(51) International Patent Classification (IPC):
**G06F 21/34** (2013.01)    **G06F 21/60** (2013.01)
**H04L 9/32** (2006.01)    **H04L 9/40** (2022.01)

(52) Cooperative Patent Classification (CPC):
**G06F 21/34; G06F 21/606; H04L 9/3271;**
**H04L 63/0428; H04L 63/08;** G06F 21/10;
G06F 2221/2103; G06F 2221/2133; H04L 2463/101

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Orange**
**92130 Issy-les-Moulineaux (FR)**

(72) Inventors:
• **MUSCA, Cristiana**
  **020334 BUCAREST (RO)**
• **MOCANASU, Ancuta**
  **020334 BUCAREST (RO)**
• **MITTIG, Karel**
  **020334 BUCAREST (RO)**

(74) Representative: **Regimbeau**
**20, rue de Chazelles**
**75847 Paris Cedex 17 (FR)**

(54) **METHOD FOR ACCESSING A DIGITAL CONTENT BASED ON THE DECRYPTION BY A CLIENT OF AN ENCRYPTED CHALLENGE**

(57) This invention relates to a Method for controlling an access of a client, to a digital content available through a telecommunication network (N), comprising said client being prompted to answer (S6) to a challenge provided (m2) by a server (S) in order to access said digital content, said method further comprising the following steps, performed by the client:

receiving (S3) code instructions for generating the challenge, encrypted by an encryption key which is determined at the server, and information adapted for enabling said client to retrieve a decryption key,

retrieving (S4) a decryption key using said information, and

decrypting (S5) said encrypted code instructions for generating the challenge with said retrieved decryption key.

Figure 2

**Description**

FIELD OF THE INVENTION

The invention relates to a method for controlling the access of a client to a digital content available through a telecommunication network, and in particular to a web content available at a web server. It aims in particular at preventing automated pieces of software to interact with such contents.

BACKGROUND OF THE INVENTION

Over the last decades, solutions have been elaborated to control the access of automated software to digital contents provided by server through a telecommunication network, in particular contents available at a web server through internet (so-called web contents). Aims comprise, for instance, to avoid such bots (automated software) to fill and submit forms and massively send spam information to websites' owners, or to use brute force to get access to protected web content by entering a large number of login data, etc.

Most solutions are based on Turing test, which aims the server to distinguish between an automated software and a human being by analyzing the behavior and the interaction of the client. These solutions are usually referred to as CAPTCHA™ (acronym for "Completely Automated Public Turing test to tell Computers and Humans Apart").

These tests consist of a dialog box asking the user to solve a challenge that is simple for a human but complex for a machine. This mechanism is well documented in the technical literature, and the dedicated Wikipedia page can be an entry point to this technology:

https://en.wikipedia.org/wiki/CAPTCHA

Today, numerous challenges have been defined and implemented, including image recognition and classification, text reading, puzzle solving and more.

However, confronted with these problems, attacks have begun to focus not on solving the challenge itself, but rather on decompiling, analyzing and manipulating the code and data that is used to generate the challenge.

This is a particularly sensitive point with captchas, used to control the access to a web content through internet, as they are using JavaScript interpreted language to run in the end-user web browser. Indeed, the use of interpreted language makes code analysis much simpler for the attacker and gives him the opportunity to modify it.

Then, to protect against such threat, which is sometimes called a man-in-the-end (MITE) attack, the state-of-the-art approach today is to use various obfuscation technics, or in the most complex approaches to define a proprietary language that runs on top of a virtual machine encoded itself in JavaScript.

Nonetheless, even so, those obfuscation approaches will never fully prevent automated code reverse-engineering, as the code must be turned into a readable format at one stage or another to be correctly interpreted by the web browser.

Another type of solutions used for controlling the access of automated software to a digital content may be based on proof of work (PoW) concept.

PoW concept is a concept primarily associated with blockchain technology and is usually implemented by using a cryptographic hash function (such as SHA-256) that takes an input and produces an output which depends on this input.

PoW relies on requiring the client to perform a certain computational task to solve a so-called "proof of work challenge" (also called "proof of work puzzle"), slowing down its activity in such a way that it would not be determinant for a human being but would limit the activity of a bot having a massive and automated behavior. Such a proof of work challenge typically relies on solving a mathematical function, and in particular in applying a mathematical function, such as a crypto to different input values until an output of this function fulfills one or more predetermined requirements: in that case, the first input value enabling to obtain such a successful output corresponds to a solution to the PoW challenge associated with this mathematical function.

The difficulty of solving a puzzle associated with a PoW usually depends on the requirement(s) regarding its function output, for instance a number of zeros required at the beginning of the output delivered by its function (i.e. applying a cryptographic hash function iteratively to several inputs until an output is found which begins with a single '0' takes less time and/or requires less computing resource than applying this cryptographic hash function iteratively to several inputs until an output is found which begins with a several '0').

Some solutions, like "FriendlyCaptcha" (see https://friendlycaptcha.com/), uses such a PoW concept to verify if the user is legitimate, instead of using a Turing-test based challenge where a user is asked to solve a challenge. In practice, the "Friendly Captcha" does not present a challenge to the user, like a traditional CAPTCHA™ that requires solving puzzles or identifying images. Instead, Friendly Captcha" solely relies on a Proof of Work (PoW) mechanism. This process happens in the background, with the user's device performing a small cryptographic calculation. There is no interactive challenge for the user to complete, making the process more seamless and user-friendly than in a traditional CAPTCHA™. Such PoW-based method effectively differentiates between real users and automated bots without interrupting the user experience.

However, the efficiency on such a PoW-based solution to slow bot down is deeply linked to the computation effort required from the client, which harms the user experience.

There is therefore a strong need to improve the existing methods for providing access to some web-content to clients at a web server.

SUMMARY OF THE DISCLOSURE

An object of the present invention aims in alleviating at least partly the above-mentioned drawbacks.

This object is achieved with a method for controlling an access of a client, to a digital content available through a telecommunication network, comprising said client being prompted to answer to a challenge provided by a server in order to access said digital content, said method further comprising the following steps, performed by the client:

- receiving code instructions for generating the challenge, encrypted by an encryption key which is determined at the server, and information adapted for enabling said client to retrieve a decryption key,
- retrieving a decryption key using said information, and
- decrypting said encrypted code instructions for generating the challenge with said retrieved decryption key.

By doing so, not only the code that is used to generate the challenge at the client is better protected from potential decompiling and manipulation attempts by MITE attackers, but also the computational effort required for retrieving the decryption key hampers massive and automated attacks from automated software bots, hence providing an enhanced digital content control access method.

Preferred embodiments comprise one or more of the following features, which can be taken separately or together, either in partial combination or in full combination :

- the encryption key may be determined at the server by solving a proof of work challenge using said information, and wherein said step of retrieving a decryption key comprises solving said proof of work challenge using said received information;
- said decryption key and said encryption key are the same key, which corresponds to a value solving said proof of work challenge;
- solving a proof of work challenge comprises applying a mathematical function to each one of a plurality of input values, said encryption key being the first output value of the mathematical function which fulfills a predetermined criterion;
- said information comprises a random value and wherein, for each of said input values, said mathematical function is applied to the concatenation of said random value and said input value;
- wherein said information comprises a difficulty level useable for defining said predetermined criterion, the encryption key being the first output value of the mathematical function which fulfills a predetermined criterion in accordance with said difficulty level.
- said difficulty level is determined by said server according to at least one feature among a behavioral feature and a statistical feature associated with said client;
- said at least one feature mitigates a by-default value assigned to said difficulty level;
- said statistical feature is determined according to a reputation database and an identifier of said client;
- said challenge is a Turing-test based challenge;
- the encryption key is a private key of a pair of public and private keys, generated by the server using a value solving the proof of work challenge, and wherein the step of the retrieving the decryption key comprises generating said pair of public and private keys, using a value solving the proof of work challenge, the decryption key being the public key of said generated pair.

Another aspect relates to a computer program comprising code instructions for executing a method as previously described.

Another aspect relates to client for accessing to a digital content available through a communication network, said device comprising at least one processor configured to:

receive, from a server, code instructions for generating a challenge encrypted by an encryption key determined at said server, and
information adapted for enabling said device to retrieve a decryption key,
retrieve the decryption key using said information,
decrypt said encrypted code instructions for generating the challenge with said decryption key, and
prompt a user to answer to said challenge in order to access said digital content.

Another aspect relates to server for controlling an access, with a client device, to a digital content available through a communication network, said device comprising at least one processor configured to:

determine an encryption key,

encrypt code instructions for generating a challenge using said encryption key,

send, to said client device, said encrypted code instructions for generating the challenge and information adapted for enabling said client to retrieve a decryption key, and

receive, from said client device, a message containing an answer to said challenge, decrypted by said client with decryption key retrieved by the client device using said information.

Another aspect relates to a system comprising a client and a server, both as previously described.

Further features and advantages of the invention will appear from the following description of embodiments of the invention, given as non-limiting examples, with reference to the accompanying drawings listed hereunder.

BRIEF DESCRIPTION OF THE DRAWINGS

Figure 1 illustrates an example of context in which the invention can be implemented according to embodiments.

Figure 2 illustrates a flow chart depicting possible interactions between a client and a server according to embodiments of the invention.

Figure 3 depicts a flow-chart of possible embodiments for the server to generate a symmetric encryption key.

Figure 4 depicts a flow-chart of possible embodiments for the client to decrypt a challenge.

Figure 5 depicts a flow-chart of possible embodiments for the server to select a difficulty level.

Figure 6 depicts a flow-chart of possible embodiments for the server to determine a behavioral feature.

Figure 7 depicts a flow-chart of possible embodiments for the server to determine a statistical feature.

Figure 8 depicts functional views of a client C and a server S according to embodiments of the invention.

DETAILED DESCRIPTION OF EMBODIMENTS

A method is proposed for a client to access to a digital content available at a server through a telecommunication network, and in particular a digital content available at a web server through internet.

It may be desirable to control the access of such a content in certain cases, for instance when this content contains risks of being attacked by automated software bots.

It is for instance the case when this digital content comprises resources like forms, adapted for a client to enter data to be submitted to a website. These data may be login information (in order to enter a protected zone of a web site), or any information to be provided to a responsible person managing the web content (for instance, a form adapted for submitting an e-mail to a person in charge without disclosing its e-mail address).

Of course, many other applications maybe be envisaged as accessible to the person skilled in art.

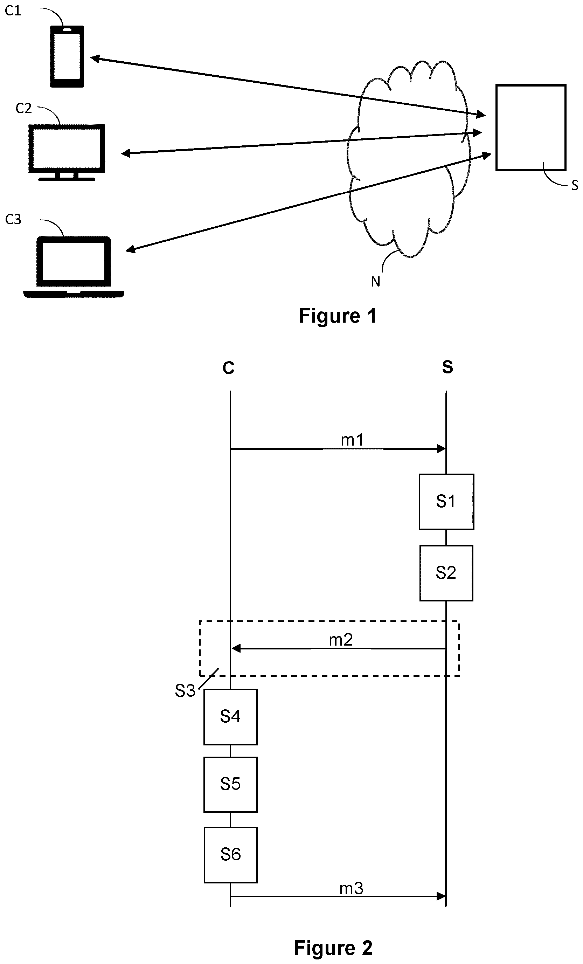

**Figure 1** illustrates an example of context where the proposed method can be implemented.

In this figure 1, a server S and several clients C1,C2,C3 are depicted.

By definition, a client in the meaning of the present invention is a either device (in other words a client device) or a computer program, running on a device, that accesses a digital content service or data made available by a server. Several types of clients may be considered in the present context. In particular, as depicted, a mobile telecommunication device C1 (smartphone, digital tablet...), a connected TV set C2, a laptop or desktop computer C3, etc. may be considered in the scope of the proposed method.

According to embodiments, the clients C1, C2, C3 comprise means to interact with a first server S, in order to access a digital content available at a second server (e.g. a web server, not depicted), through a telecommunication network N (e.g. internet).

The telecommunication network N may in particular comprise several subnetwork including, according to embodiments, a local network, an access network, a backbone network... as known in the art.

In the context of an internet network, the clients may comprise web browsers enabling to access to web contents available at web servers.

The server S may be a typical web server, i.e. a functional entity. This web server S may be deployed on one or several actual machines (or servers). In some cases, the server S may even be deployed on an abstracted or virtualized infrastructure.

According to the proposed method, a client C1, C2 or C3 is prompted to answer to a challenge provided by the first server S, in order to get access to a web content provided by a second server. Such a server S therefore controls the access to contents provided by this second server, by providing to a user equipment (such as the clients C1-C3) wishing to access these contents, data and code instructions to generate a challenge to a user equipment (typically in a web browser displayed by this user equipment) and verifying its response to this challenge. Such a server S can be designated as a challenge server, or a CAPTCHA™ server when the challenge is specifically a CAPTCHA™.

Typically, this prompt is triggered by a first digital web content received beforehand by one of the clients from the server S. This first digital content may for instance be an HTML page, received in response to a request sent by one of the clients to the server S (typically a http request), and the HTML code in this HTML page may refer the challenge: it may for instance contain (or refer to) a script (e.g. in JavaScript) adapted for requiring the challenge to the server S.

According to usual practice, the challenge is determined by the server S in such a way that it would be different for each request to access a digital content that this server S receives.

Many types of challenges are available in the art, as the skilled person knows as well as any Internet user knows.

In particular, as already mentioned, the challenge may be based on a Turing test, which enables the server to distinguish between an automated software and a human being by analyzing the behavior and the interaction of the client. This kind of challenge are usually referred to as CAPTCHA™ (acronym for "Completely Automated Public Turing test to tell Computers and Humans Apart").

CAPTCHA™ challenges are for instance explained in more details on the dedicated webpage, showing also some typical examples:

https://en.wikipedia.org/wiki/CAPTCHA

**Figure 2** illustrates an interaction between a client C and a server S according to embodiments of the proposed method.

In a preliminary step, typically after that the client C has accessed to a first web digital content containing a reference to a challenge (such as a CAPTCHA challenge), the client C sends a request m1 to the server S in order to get this challenge.

In step S1, after receiving this request m1, the server S determines an encryption key, to be used to encrypt the requested challenge.

In a preferred embodiment where symmetric encryption is relied upon, this encryption key is a symmetric encryption key $K_S$. In such an embodiment, the same encryption key $K_S$ is used both at the server S, for encrypting the requested code instructions for generating a challenge at the client C, and at the client C, for decrypting the cyphered code instructions for generating this challenge, as explained later.

However, the present invention is not limited only to a symmetric encryption of the challenge. In particular, in another embodiment where asymmetric encryption is relied upon, this encryption key may be a private key $K_{priv}$ of key pair $(K_{pub};K_{priv})$ comprising a public key $K_{pub}$ and a corresponding private key $K_{priv}$. In that case, the server S may first generate this key $(K_{pub};K_{priv})$, in particular as explained later, then assigns the private key $K_{priv}$ of this pair as the encryption key to be used for encrypting the code instructions for generating the challenge.

The determination of this encryption key may in particular comprise applying a mathematical function POW to a set of parameters $P_1...P_k$, so that $K=POW(P_1, ..., P_k)$, both the server S and the client C being configured to apply such a mathematical function POW.

In an embodiment, to ensure that both the server S and the client C are configured to apply the same mathematical function POW, the server S (which stores this mathematical function POW, for instance as a series of code instructions written in Python code) may send this mathematical function POW to the client C after receiving the request m1, either in a dedicated message sent directly after receiving this request (not depicted in figure 2), in a dedicated message sent before providing the message m2 to the client C (step 3 discussed later) or within the message m2 sent to the client C (step 3 discussed later). The mathematical function POW to be sent to the client C may be converted by the server S in a programming language which can be easily interpreted by this client C (e.g. Javascript).

In a preferred embodiment of the present invention, this function POW is set so that it constitutes a proof of work challenge (typically based on the use of a cryptographic function, and in particular a hash function), which implies a sufficient computational effort to be solved, and thus may sufficiently hampers automated attempts from automated software bots to render such attempts unworthy.

In that case, the encryption key is determined by the server by first solving this proof of work challenge, then deriving the encryption key either directly or indirectly from at least one value which solves this proof of work challenge.

In the preferred embodiment where symmetric encryption is relied upon, the encryption key $K_S$ is one of these values which solve this proof of work challenge, and advantageously the first found one of these values when attempting to solve this proof of work challenge repeatedly. In other words, solving the proof of work challenge directly provides the encryption key $K_S$ to be used to encrypt the code instructions for generating the requested challenge (as well as the decryption key $K_S$ to be used to decrypt these encrypted code instructions, when performed on the client side).

In the alternative embodiment where asymmetric encryption is relied upon, the encryption private key $K_{priv}$ is indirectly obtained from one of the values which solve this proof of work challenge: a value solving the proof of work challenge is used as a seed, by a key pair generating algorithm, in order to generate a pair of public and private keys ($K_{pub}$;

$K_{priv}$). Then, the private key $K_{priv}$ is used as the encryption key to encrypt the code instructions for generating the requested challenge.

In an embodiment, solving such a proof of work challenge comprises, for each one of a plurality of input values, applying a mathematical function to said input value, so that, for each of these input values, the mathematical function provides an output value. The output values which fulfill a predetermined criterion (for instance, which starts with a given number of '0') are solutions of the proof of work challenge and the encryption key may be the first obtained output value which fulfills this predetermined criterion.

In some embodiments, this kind of POW function, when used for determining the encryption key K, may depend on parameters like a random value and/or a difficulty level. It can be based on state-of-the-art techniques, like using hashing functions according to SHA-1 or SHA-2. More particularly, SHA 256 or SHA 512, which belong to the SHA-2 family, can be used for generating a 256-bit or, respectively, 512-bit hash value.

In an embodiment where a proof of work challenge is solved in order to determine the encryption key, a random value is first generated, typically represented in the form of an initial string of characters, such as a string of N hexadecimal characters encoding the random value, as shown below (where N=32 for instance) :

*27fac7a5959775a63a50f5c4e35988b8087539e98f911e3da34a2b4600da897f94*

Such a random value can be generated using a random number generator or random byte generator (get_random_bytes(N).hex() in Python code library) as known by the skilled person. Such a random value can be generated by the server S each time it receives a new request for a challenge, to hamper any malicious attempt from an attacker analyzing a previously generated challenge.

Once this initial string of characters representing a random value has been generated, a cryptographic hashing function (such as SHA256) may be applied repeatedly on this initial string of characters and on a series of input values (for instance nonces), until obtaining an input value for which the output of the cryptographic hashing function fulfills a predetermined requirement to be applied to the proof of work challenge (i.e. this "successful" output value is then the result of the proof of work challenge).

In a specific embodiment of the proof of work challenge, for each one of a plurality of input values, this initial string of characters representing a random value is first concatenated with this input value, and the string of characters resulting from this concatenation is used as an input to the cryptographic hashing function.

In this specific embodiment of the proof of work challenge, the first of these input values had a predetermined value (for instance zero) and the next input values are incremented (+1 from the previous one) each time the output of the cryptographic hashing function does not fulfill the predetermined criterion. This ensures that, for a given random value, the same output value solution is always found when solving the Proof of Work challenge on different devices (here the server S and the client C)

The input value solving such a cryptographic hashing function may be a string of characters, and may be in particular a byte string, which can contain ascii characters or non-printable characters.

In another embodiment where a proof of work challenge is solved to determine the encryption and decryption keys, the requirement of the proof of work challenge depends on a difficulty level $D_{POW}$, the value of which is proportional to the difficult to solve this proof of work challenge.

For instance, a hash function such as SHA256 may be applied on the initial string of characters representing a random value, until obtaining a result of the hash function which has a prefix starting with $D_{POW}$ times '0' (for instance starting a result "00005721875498" with a difficulty level of 4).

The larger this $D_{POW}$ is, the greater the number of '0' are required at the beginning of the output value resulting from the hash function, and the more difficult and time consuming it is to solve this proof of work challenge. When executed at the client, this increase the protection against automated attempts from automated software bots, at the potential expense of a diminished user experience, since it takes more time to display the challenge, so that a compromise is to be found when choosing this difficulty level.

An example of such a proof of work challenge is given in the code snippet below, written in Python code :

```
def proof_of_work(initial_string, difficulty_level):
    Prefix = "0" * difficulty_level # Number of leading zeros in the hash
    Nonce = 0
    While True:
```

$$data = f"\{initial\_string\}\{nonce\}".encode()$$

$$\_sha256 = hashlib.sha256(data)$$

$$If\ \_sha256.hexdigest().startswith(prefix):$$

$$Return\ \_sha256.digest()$$

$$Nonce += 1$$

In this code snippet, a nonce is initially set at '0' value and is incremented as long as the result of a SHA256 function applied to the concatenation of an initial string of characters (representing a random value generated after receiving a request to obtain a challenge from a client) and this nonce provides an output whose hexadecimal version does not start with D times "0". The result of this challenge (to be used as an encryption key) is then the first output value of the SHA256 function which, when converted into hexadecimal format, provides string of characters starting with at least D times "0".

At this stage, the server S also determines code instructions for generating a challenge, preferably a Turing-test type challenge (for instance a CAPTCHA™ challenge), to be prompted to a user to discriminate a human user from an automatic bot. This determination may comprise selecting a type of challenge in a challenge repository database, and/or setting parameters to a predetermined type of challenge.

In step S2, the server S encrypts these code instructions for generating the challenge (and possibly also data required when generating this challenge, if there are some) by using the encryption key determined at step S1.

Indeed, the challenge is basically generated at the client by executing, with one or more processing units of the client, a computer code (written in a programming language such as JavaScript or any other scripting code), consisting in a series of code instructions, which can be considered as a character chain, or binary data, and inputted to an encryption algorithm. These code instructions are typically prepared or stored at the server, in order to be sent upon request to the client where can be executed to generate the challenge to be prompted to a user, typically in an end-user web browser displayed by the client.

The encryption of these code instructions for generating the challenge can be performed by using an AES (Advanced Encryption Standard) algorithm in GCM (Galois/Counter Mode), which is a common method used for encrypting data securely.

An example of such a challenge code instructions encryption is given in the code snippet below:

$$challenge\_body = "json\ challenge\ gets\ here"$$

$$difficulty\_level = 3\ \#Default\ value$$

$$initial\_random\_string = get\_random\_bytes(32).hex()$$

$$aes\_key = proof\_of\_work(initial\_random\_string, difficulty\_level)$$

$$aes\_cipher = AES.new(aes\_key, AES.MODE\_GCM)$$

$$challenge\_json = json.dumps(challenge\_body)$$

$$aes\_nonce = aes\_cipher.nonce$$

$$ciphertext,aes\_tag=aes\_cipher.encrypt\_and\_digest(challenge\_json.encode())$$

$$\#\ return\ to\ client/browser$$

$$return\ \{$$

$$"initial\_random\_string": initial\_random\_string,$$

$$"difficulty": difficulty\_level,$$

$$"aes\_nonce":aes\_nonce.hex(),$$

$$"ciphertext: ciphertext.hex()",$$

$$"aes\_tag":aes\_tag.hex(),$$

Then, at step S3, the server S provides, within a message m2 sent to the client C, both the encrypted code instructions for generating the challenge (and possibly also data required when generating this challenge, if there are some) and information adapted for enabling the client to retrieve this encryption key.

In other words, the decryption key itself is not provided to the client C, but rather means (i.e. the information, such as the random value used or the difficulty level used when solving a proof of work challenge to determine the encryption key) enabling the client C to retrieve this decryption key.

More generally, if an encryption key K is determined by the server S by applying a function POW to a set of parameters $P_1...P_k$, so that $K=POW(P_1, ..., P_k)$, then the parameters $P_1...P_k$ are provided to the client C. The client may then apply the same function POW on the received parameters, to retrieve the decryption key K.

In an advantageous embodiment, as discussed before, this function POW may be set so that it constitutes a proof of work challenge (typically based on the use of a cryptographic function), which implies a sufficient computational effort on the client to be solved. In that case, the decryption key may be derived, preferably directly (but could be also indirectly) from one of the resulting solutions which solve this proof of work challenge. As will be seen later, this kind of POW function, when used for retrieving the decryption key, may depend on parameters like a random value and/or a difficulty level.

The client C can then retrieve (step S4) the decryption key, using the information received from the server S, which was also used when determining the encryption key at the server S.

In an advantageous embodiment where the encryption key has been generated at the server S by solving a proof of work challenge using this information, the same proof of work challenge is also applied, by the client, using this received information to retrieve the decryption key.

When said information comprises a random value, generated by the server, this random value may be used by the client C, when solving the proof of work challenge, in the same way as previously described, when it was used by the server when solving the proof of work challenge to determine the encryption key.

In particular, this random value can be concatenated repeatedly with an incremental value (such as a nonce), and the resulting concatenated value can be used repeatedly as an input to a mathematical function (the same as the one used by the server) until an output is obtained which fulfills a predetermined criterion.

Similarly, when the proof of work challenge relies on a mathematical function and when said information comprises a difficulty level which can be used to define a predetermined criterion to be fulfilled by this mathematical function, this difficulty level may be used by the client C, when solving the proof of work challenge, in the same way as previously described, when it was used by the server when solving the proof of work challenge to determine the encryption key.

In an embodiment where symmetric encryption is relied upon, the decryption key which is retrieved by the client C when solving the proof of work challenge is exactly the same key as the encryption key which was determined by the server, when solving the same proof of work challenge.

In other words, both encryption and decryption keys are the same value, solving the same proof of work challenge, when run respectively on the server and client. In particular, when solving the proof of work challenge comprises applying a mathematical function to each one of a plurality of input values, the decryption key is the first output value of the mathematical function which fulfills a predetermined criterion.

In the alternative embodiment where asymmetric encryption is relied upon, the decryption key is indirectly obtained from one of the values which solve this proof of work challenge: a value (the first found one preferably) solving the proof of work challenge is used as a seed, by the same key pair generating algorithm as the one used by the server, in order to generate a pair of public and private keys ($K_{pub}$ ; $K_{priv}$), which is the same pair as the one generated by the server when determining the encryption key. Then, the public key $K_{pub}$ of this pair is used as the decryption key to decrypt the encrypted code instructions to generate the challenge, which have been received from the server.

Once the decryption key is retrieved by the client, the client uses it, at step S5, to decrypt the received encrypted code instructions for generating the challenge (and possibly the received encrypted data required to generate this challenge, if also received), using a decryption algorithm corresponding to the encryption algorithm as previously described.

In step S6, the client can then execute the decrypted code instructions to generate (possibly using the received data require for this generation, if also provided by the server) the challenge, which may then be rendered by the client according to state-of-the-art techniques, possibly together with a first digital content initially referring to this challenge as previously discussed. The first digital content, including the challenge, can be rendered, and displayed on a human-machine interface (screen, virtual reality, vocalized interface...) prompting the client to answer to this challenge. In particular, this prompt may be destined to a user of the client, who is required to solve the challenge.

When solved by the user (i.e. a human being), the client C can submit the answer provided by the user to the server S, by sending a message m3 containing this answer to the server S.

Based on this answer, the server S can then determine whether the client C is actuated by a user or by an automated piece of software. According to this determination, it can decide how to behave with regard to this client, and for instance accept or not any of its submissions, grant or not access to some digital content, etc.

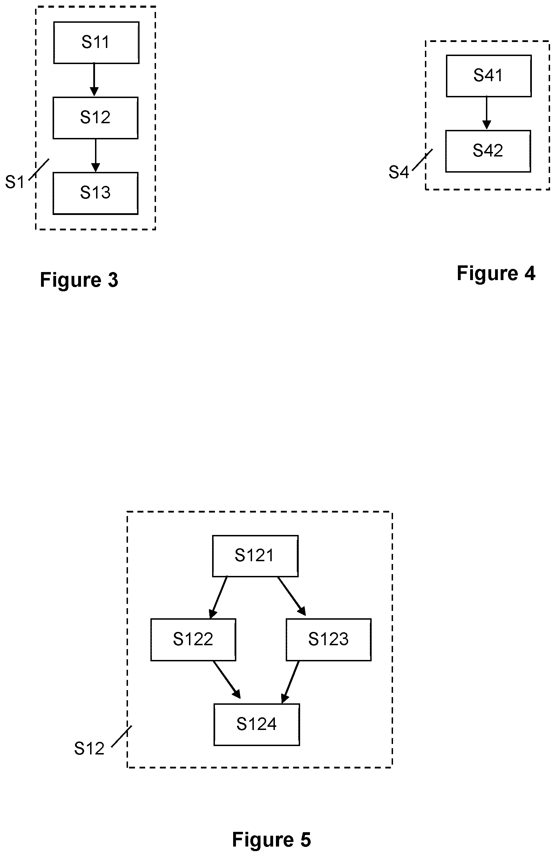

**Figure** 3 depicts a flow-chart of possible embodiments for the server to generate the encryption key at step S1.

According to some embodiments, at step S11, a random value $V_{POW}$ is generated by the server S.

According to some embodiments, at step S12, a difficulty level $D_{POW}$ is selected by the server S.

According to some embodiments, at step S13, the encryption key K is determined according to at least one parameter among the random value and the difficulty level. According to a preferred embodiment, the encryption key is determined according to both the random value and the difficulty level, using a function, such as a proof of work function, so that:

$$K=POW(V_{POW}, D_{POW}).$$

.The parameters $V_{POW}$ and $D_{POW}$ are then provided to the client C, so that the client can retrieve the decryption key using these parameters, e.g. by applying the same function as used in step S13 to these parameters.

**Figure 4** depicts a flow-chart of possible embodiments for the client to decrypt the encrypted code instructions for generating the challenge, at step S4.

At step S41, the client uses the received information (e.g. parameters $V_{POW}$, $D_{POW}$) for applying the same POW function using this parameters, in order to retrieve the decryption key $K=POW(V_{POW}, D_{POW})$.

As previously discussed, when the encryption key is a symmetric encryption key $K_S$, at step S42, the client can directly use this symmetric encryption key $K_S$ to decrypt the received encrypted code instructions for generating the challenge. Alternatively, when asymmetric key cryptography is used (i.e. when the challenge has been encrypted by the server S using a private key), the client can use the received information (e.g. parameters $V_{POW}$, $D_{POW}$) for applying the same POW function using these parameters, in order to retrieve a public key, which can then be used to decrypt the received encrypted code instructions for generating the challenge.

**Figure 5** depicts a flow-chart of possible embodiments for the server to select a difficulty level $D_{POW}$, at step S12.

The difficulty level $D_{POW}$ is selected to constitute a proof of work for the client, and is a compromise between the need to prove the computation efforts of the client C and the requirements to avoid decreasing the user experience.

According to embodiments, this difficulty level may be determined by the server according to at least one feature among

- a behavioral feature, and,
- a statistical feature, both associated with the client.

The behavioral feature aims at capturing elements in the client-server interactions that may be appreciated to increase or decrease the probability of .the client to be an automated piece of software, from the server's perspective. The difficulty level $D_{POW}$ may be increased according to this probability.

The statistical feature aims at capturing similar elements from statistics constituted along other interactions with other servers and shared in a common database. The difficulty level $D_{POW}$ may be increased or decreased according to a reputation associated with the client C in this shared database.

According to embodiments, this or these features mitigate(s) a by-default value assigned to the difficulty level.

At step S121, the server S may then assign a by-default value to the difficulty level $D_{POW}$. This by-default value may not depend on the client C and may be the same for all clients. It could be set to a mean value to the range of difficulty levels that could be assigned to the clients.

A common starting point (for general web use) is to set a difficulty level $D_{POW}$ so that it would take an average computer a few seconds to solve a proof of work challenge requiring such a difficulty level $D_{POW}$. For instance, when the proof of work challenge relies on a hash function, a by-default difficulty level $D_{POW}$ of 3 (corresponding to a requirement for a hash with 3 leading zeros) can be used. In a specific embodiment, such a by-default difficulty level can be adjusted later, based on the observed performance.

According to embodiments, at step S122, a behavioral feature may be determined by the server, specifically for the client C.

According to embodiments, at step S123, a statistical feature may be determined by the server, specifically for the client C.

Then, at step S124, the server S can select a difficulty level $D_{POW}$ according to the statistical and/or behavioral features that have been previously determined. In particular, the by-default value, or another value, can be selected on that basis for the difficulty level according to such feature(s).

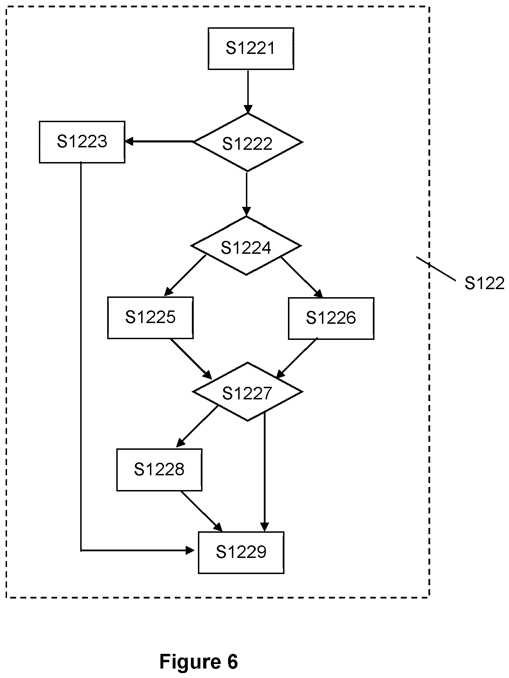

**Figure 6** depicts a flow-chart of possible embodiments for the server to determine a behavioral feature, at step S122.

According to this particular embodiment, at step S1221, the server retrieves if a behavioral history exists for requesting client C. This behavioral history can be stored locally within the server, or shared between a set of servers belonging to a same functional entity (enterprise, institution...). The behavioral history may be limited to a time window. This history stores data relating to previous challenge answers of the clients. Associating a behavioral history to a client can be based on its IP address, by setting a session cookie or using a permanent cookie - the IP address being the more efficient as it is harder to manipulate by an attacker.

At step S1222, the server S checks if some data exists for this client in the behavioral history or not.

If not, the client is unknown. At step S1223, no mitigation is applied to the by-default difficulty level $D_{POW}$. The process goes to the final step S1229.

If yes, then the process goes to step S1224, the server checks, from the retrieved data, whether the client has already failed in resolving the submitted challenge:

- if yes, at step S1225, the behavioral feature is set to increase the difficulty level,
- if not, at step S1226, the behavioral feature is set to decrease the difficulty level.

The amount of the increase and of the decrease is matter of configuration. Also, where the client has been prompted several times to a challenge by the server, an overall estimation can be determined to decide on the behavioral feature. In general, clients showing a bad resolution history ratio will have their difficulty level $D_{POW}$ increased, while clients showing a good resolution history ratio will have their difficulty level $D_{POW}$ decreased.

At step S1227, the server may analyze, from the retrieved data on the behavioral history, how the client C solved the previous challenges: how fast, how often, ... On this basis, the server can determine abnormal behavior for which a penalty will be applied.

If an abnormal behavior is detected, then, at step S1228, the behavioral feature is set to increase the difficulty level.

Along the whole processus the behavioral feature can be updated. At step S1229, the resulting behavioral feature is fully determined and can be used to determine the difficulty level $D_{POW}$ at step S13.

The skilled person could derive many variations from the exemplary embodiments depicted on Figure 6. In particular, some steps may be omitted or ordered differently.

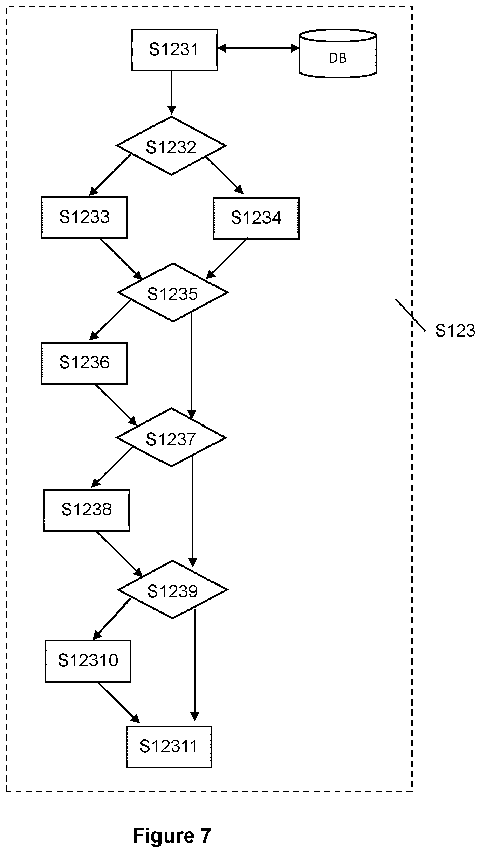

Figure 7 depicts a flow-chart of possible embodiments for the server to determine a statistical feature, at step S123.

As explained before the statistical feature may be determined by the server S alternatively or in addition to the behavioral feature. According to embodiments, the difficulty level $D_{POW}$ may be determined according to one of those or according to both.

The statistical feature aims in capturing statistics about the client at a larger scale than the server S, i.e. relating to its behavior with regard to other network entities than the server itself.

The statistical feature can for instance be based on a shared database DB storing data about clients' reputation. This database can be named a "cyberthreat intelligence database" or a "reputation database" (or a set of those).

The database DB can be internal or external to the network of the entity managing the web server S. In particular, the database DB can be managed by a third party in charge of gathering data from several servers S.

The reputation database DB can reference identifiers of clients (for instance IP addresses), for which cyber-malicious actions have been previously identified (spam transmission, brute-force attempts, etc.). The database may by-default also reference IP addresses associated to the TOR network, for instance, which is mostly used to hide malicious behavior.

According to some embodiments, the server S determines a statistical feature according to an identifier of the client C and this reputation database DB.

Various schemes may be envisaged for determining this statistical feature from the content of the reputation database. In particular, data like the identifier of the client, the network location of the client, the geographic location of the client, browser/OS information, etc. can be used.

The figure 7 illustrates a particular example scheduling different tests on the content of the reputation database, but the skilled person could diverge from this particular example by, for instance, omitting or reordering some of the tests.

According to embodiments, at step S1231, the server S queries the reputation database DB with an identifier of the client C and retrieve its profile if it exists inside the database.

According to this match in the database, at step S1232, the server S checks whether the stored reputation of the client C is positive or negative.

- if negative, at step S1233, the statistical feature is set to increase the difficulty level,
- if positive, at step S1234, the statistical feature is set to decrease the difficulty level.

At step S1235, another test can be performed by the server, regarding the client's access provider network.

Some network access providers are notorious for taking no action against customers carrying out malicious activities. If the client's network carrier falls in this category, the, at step S1236, the statistical feature is set to increase the difficulty level.

At step S1237, another test can be performed by the server S, regarding the geographical location of the client C.

Some countries, for instance, may be considered and tagged as hosting many cyber-attackers. In such cases, at step S1238, the statistical feature is set to increase the difficulty level.

At step S1239, another test can be performed by the server S, regarding the software configuration, e.g. OS, browser, etc.

Web-browser headers contain a great deal of information, the consistency of which can be checked to identify anomalies or automata. For example, the User-Agent header provides information about the web browser and system versions used by the client, and some values can be detected as invalid or related to automated scripts. There are also known technics used to fingerprint the TCP and HTTP(s) connections, allowing to identify for example the operating system used by the client. This information can be used directly or cross-referenced with the browser headers mentioned above to detect anomalies.

Anomalies schemes can be stored and shored among servers, for instance in a database DB, and constantly updated to track new techniques and tools used by cyber-attackers.

In case incoherent or malicious information were found by this analysis, then, at step S12310, the statistical feature is set to increase the difficulty level.

At step S12311, the statistical feature has been updated according to the proposed sequence of tests, each potential impacting its value.

Then, the updated statistical feature can be used, potentially in collaboration with the behavioral feature, for determining the difficulty level $D_{POW}$.

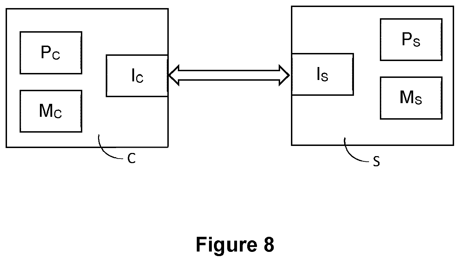

**Figure 8** illustrates a client C and a server S according to embodiments of the invention.

As mentioned above, the client C may be a device of various types. From a high-level functional perspective, it may comprise a network interface Ic adapted for enabling the client to communicate with at least one server S through a telecommunication network. It may further comprise one or more processor(s) $P_C$ and one or more associated memory(ies) $M_P$.

The processor is adapted for performing the above-described methods. A single processor may perform all the steps of the above-described methods when performed on the client side or several processors could be used to perform some of these steps, so that the execution of the above-mentioned method steps are distributed among these processors. In particular, the processor(s) is adapted to

- receive (S3), from the server S, code instructions for generating a challenge encrypted by an encryption key determined at said server, and information adapted for enabling said device to retrieve a decryption key,
- retrieve (S4) the decryption key using said information,
- decrypt (S5) said encrypted code instructions for generating the challenge with said decryption key, and
- prompt a user to answer (S6) to said challenge in order to access said digital content.

The server S may be a stand-alone device, or a functional server deployed over a farm of servers or any other types of abstracted platform (e.g. cloud computing platform).

From a high-level functional perspective, it may comprise a network interface $I_S$ adapted to enable the server to communicate with at least one client C through a telecommunication network.

It may further comprise one or more processor(s) Ps and one or more associated memory(ies) $M_S$. The processor(s) is adapted for performing the above-described methods. A single processor may perform all the steps of the above-described methods when performed on the server side or several processors could be used to perform some of these steps, so that the execution of the above-mentioned method steps are distributed among these processors. In particular, the processor(s) is adapted to:

- determine (S 1) an encryption key,
- encrypt (S2) code instructions for generating a challenge using said encryption key,
- send (S3), to said client device, said encrypted code instructions for generating the challenge and information adapted for enabling said client to retrieve a decryption key, and
- receive, from said client device, a message (m3) containing an answer to said challenge, generated from said code instructions after having been decrypted by said client with a decryption key retrieved by the client device using said information.

According to embodiments, by combining statistical and behavioral analysis results, one can compute an aggregated difficulty level $D_{POW}$ that will modulate the proof-of-work (POW) difficulty. This allows a better differentiation between bots and legitimate users. Bots or malicious users will have to spend a higher amount of time to decrypt the (CAPTCHA) challenge, so the possibility of having an attack will be much smaller.

More generally, it is proposed a method that improves the workflow design for a Turing-test based challenge service (for instance CAPTCHA™ or similar). Using Proof of Work techniques to generate an decryption key used to decrypt the actual challenge is a new proposal that allows decreasing the time spent by the entire workflow. More than that, according to embodiments, this proposal may use an external database storing IP reputation to decide the difficulty level of the PoW challenge.

One of the further advances of the proposal is that it preserves the advantages of the actual CAPTCHA challenges in an approach that will help the clients distinguish between bots and real users.

The solution can be used in any CAPTCHA service, by encrypting the entire or parts of the challenge sent to the user, but can also be applied to other types of challenge, since, as explained earlier, the overall mechanism is technically independent of the challenge: the only condition is that the challenge shall be captured in computer code that could be encrypted before transmission from the server to the client.

The invention has been described with reference to preferred embodiments. However, many variations are possible within the scope of the invention.

**Claims**

1. Method for controlling an access of a client, to a digital content available through a telecommunication network (N), comprising said client being prompted to answer (S6) to a challenge provided (m2) by a server (S) in order to access said digital content, said method further comprising the following steps, performed by the client:

   receiving (S3) code instructions for generating said challenge, encrypted by an encryption key which is determined at the server, and information adapted for enabling said client to retrieve a decryption key,
   retrieving (S4) a decryption key using said information, and
   decrypting (S5) said encrypted code instructions for generating said challenge with said retrieved decryption key.

2. Method according to the previous claim, wherein the encryption key is determined at the server by solving a proof of work challenge using said information, and wherein said step of retrieving a decryption key comprises solving said proof of work challenge using said received information.

3. Method according to the previous claim, wherein said decryption key and said encryption key are the same key, which corresponds to a value solving said proof of work challenge.

4. Method according to the previous claim, wherein solving a proof of work challenge comprises applying a mathematical function to each one of a plurality of input values, said encryption key being the first output value of the mathematical function which fulfills a predetermined criterion.

5. Method according to the previous claim, wherein said information comprises a random value and wherein, for each of said input values, said mathematical function is applied to the concatenation of said random value and said input value.

6. Method according to any of claims 4 or 5, wherein said information comprises a difficulty level useable for defining said predetermined criterion, the encryption key being the first output value of the mathematical function which fulfills a predetermined criterion in accordance with said difficulty level.

7. Method according to the previous claim, wherein said difficulty level is determined (S12; S124) by said server according to at least one feature among a behavioral feature (S122; S1229) and a statistical feature (S123; S12311) associated with said client (C).

8. Method according to the previous claim, wherein said at least one feature mitigates a by-default value assigned (S121) to said difficulty level.

9. Method according to any of claims 7 or 8, wherein said statistical feature is determined according to a reputation database and an identifier of said client (C).

10. Method according to any of the previous claims, wherein said challenge is a Turing-test based challenge.

11. Method according to claim 2, wherein the encryption key is a private key of a pair of public and private keys, generated by the server using a value solving the proof of work challenge, and wherein the step of the retrieving the decryption key comprises generating said pair of public and private keys, using a value solving the proof of work challenge, the decryption key being the public key of said generated pair.

12. Computer program comprising code instructions for executing a method according to any of the claims 1 to 11.

13. Client for accessing to a digital content available through a communication network, said device comprising at least one processor configured to:

   receive (S3), from a server (S), code instructions for generating a challenge, encrypted by an encryption key determined at said server, and information adapted for enabling said device to retrieve a decryption key,
   retrieve (S4) the decryption key using said information,
   decrypt (S5) said encrypted code instructions for generating said challenge with said decryption key, and
   prompt a user to answer (S6) to said challenge in order to access said digital content.

14. Server for controlling an access, with a client device, to a digital content available through a communication network, said device comprising at least one processor configured to:

   determine (S1) an encryption key,
   encrypt (S2) code instructions for generating a challenge using said encryption key,
   send (S3), to said client device, said encrypted code instructions for generating said challenge and information adapted for enabling said client to retrieve a decryption key, and
   receive, from said client device, a message (m3) containing an answer to said challenge.

15. System comprising a client according to claim 13 and a server according to claim 14.

**Figure 1**

**Figure 2**

S11

S12

S1

S13

**Figure 3**

S41

S42

S4

**Figure 4**

S121

S122

S123

S124

S12

**Figure 5**

**Figure 6**

Figure 7

**Figure 8**

Europäisches
Patentamt

European
Patent Office

Office européen
des brevets

# EUROPEAN SEARCH REPORT

**Application Number**

EP 24 30 5082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/212785 A1 (PEDDADA PRASAD [US] ET AL) 26 July 2018 (2018-07-26) * paragraph [0004] – paragraph [0079] * ----- | 1-15 | INV. G06F21/34 G06F21/60 H04L9/32 |
| X | US 2022/131688 A1 (PEDDADA PRASAD [US] ET AL) 28 April 2022 (2022-04-28) * paragraph [0003] – paragraph [0098] * ----- | 1-15 | H04L9/40 |
| A | US 9 294 502 B1 (BENISHTI EYAL [IL]) 22 March 2016 (2016-03-22) * column 1, line 20 – column 7, line 53 * ----- | 1-15 | |
| A | US 2022/231865 A1 (BEDI HARKEERAT SINGH [US] ET AL) 21 July 2022 (2022-07-21) * paragraph [0001] – paragraph [0072] * ----- | 1-15 | |
| A | US 2021/334342 A1 (HERNVALL EMIL [SE] ET AL) 28 October 2021 (2021-10-28) * paragraph [0002] – paragraph [0058] * ----- | 1-15 | |

**TECHNICAL FIELDS SEARCHED (IPC)**

G06F
H04L

The present search report has been drawn up for all claims

| Place of search | Date of completion of the search | Examiner |
|---|---|---|
| Munich | 20 February 2024 | Dang, Hoai |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
............................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 30 5082

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2024

| Patent document cited in search report | | | Publication date | Patent family member(s) | | | Publication date |
|---|---|---|---|---|---|---|---|
| US 2018212785 | A1 | | 26-07-2018 | NONE | | | |
| US 2022131688 | A1 | | 28-04-2022 | CN | 116097615 | A | 09-05-2023 |
| | | | | EP | 4179692 | A1 | 17-05-2023 |
| | | | | JP | 2023535077 | A | 15-08-2023 |
| | | | | US | 2022029796 | A1 | 27-01-2022 |
| | | | | US | 2022131688 | A1 | 28-04-2022 |
| | | | | WO | 2022019957 | A1 | 27-01-2022 |
| US 9294502 | B1 | | 22-03-2016 | NONE | | | |
| US 2022231865 | A1 | | 21-07-2022 | US | 2022231865 | A1 | 21-07-2022 |
| | | | | US | 2023179433 | A1 | 08-06-2023 |
| US 2021334342 | A1 | | 28-10-2021 | NONE | | | |

EPO FORM P0459

For more details about this annex : see Official Journal of the European Patent Office, No. 12/82